**Europäisches Patentamt**

**European Patent Office**

**Office européen des brevets**

(19)

(11) Veröffentlichungsnummer : **0 096 774**
**B1**

(12) **EUROPÄISCHE PATENTSCHRIFT**

(45) Veröffentlichungstag der Patentschrift :
09.09.87

(51) Int. Cl.⁴ : **G 01 N 27/82, G 01 N 37/00**

(21) Anmeldenummer : 83105218.8

(22) Anmeldetag : 26.05.83

(54) Treiber zum selbstzentrierenden Antreiben von langgestrecktem Halbzeug.

(30) Priorität : 11.06.82 DE 3222104

(43) Veröffentlichungstag der Anmeldung :
28.12.83 Patentblatt 83/52

(45) Bekanntmachung des Hinweises auf die Patenterteilung : 09.09.87 Patentblatt 87/37

(84) Benannte Vertragsstaaten :
FR GB IT

(56) Entgegenhaltungen :
EP-A- 0 069 239
US-A- 3 602 036
US-A- 3 670 562
Prospekt der Fa. INDUMA-MABAG GmbH, D-4176
Sonsbeck, Nr.PN 129

(73) Patentinhaber : **Institut Dr. Friedrich Förster Prüfgerätebau GmbH & Co. KG**
**Postfach 925 In Laisen 70**
**D-7410 Reutlingen 1 (DE)**

(72) Erfinder : **Reitz, Helmut**
**Sonnentalstrasse 31**
**D-7430 Metzingen (DE)**
Erfinder : **Dreher, Ulrich**
**Tannenhart 13**
**D-7411 Trochtelfingen (DE)**

## Beschreibung

Die Erfindung betrifft einen Treiber zum selbstzentrierenden Antreiben von langgestrecktem Halbzeug runden oder polygonalen Querschnitts in Längsrichtung des Halbzeuges entlang einer Laufbahn, mit einem Montagekörper, der einen Durchlaß für das entlang der Laufbahn getriebene Halbzeug aufweist, mit mindestens drei am Montagekörper gelagerten Armen, an deren dem Halbzeug nahem Ende sich jeweils ein Rotierelement befindet, wobei wenigstens eines dieser Rotierelemente angetrieben und seinerseits zur antreibenden Berührung mit dem Halbzeug befähigt ist und mit Mitteln zum gleichzeitigen und gleichförmigen Verstellen der drei Arme gegenüber dem Halbzeug. Bei den Rotierelementen ist in erster Linie an metallische Rollen gedacht, die mit einem schwingungsdämpfenden und friktionsfördernden Belag versehen sein können, es sind jedoch auch andere Ausführungen möglich.

Derartige Treiber werden insbesondere benötigt für den Transport von Prüfgut durch Werkstoffprüfeinrichtungen, wie z. B. Wirbelstromoder Streuflußgebereinrichtungen. Dabei kommt es darauf an, innerhalb eines möglichst großen Durchmesserbereiches dem Prüfgut eine gleichförmige axiale Bewegung zu verleihen und es gleichzeitig exakt entlang einer gegebenen Laufbahn durch die jeweiligen Einrichtungen zu führen, ungeachtet etwaiger Durchmesserschwankungen oder seitlicher Stöße des Treibgutes.

Aus dem Prospektblatt PN 129 der Fa. INDUNA-MABAG GmbH, D-4176 Sonsbeck ist bereits ein Treiber der oben definierten Art bekannt, bei dem drei Arme über eine Hubspindel in radialer Richtung des Halbzeuges beweglich sind und an ihrem vorderen Ende jeweils eine Treibrolle aufnehmende Gabel aufweisen. Die Achsen der Treibrollen werden über Gelenkwellen von einem gemeinsamen Getriebemotor angetrieben, wobei für die obere Rolle aus Raumgründen ein zusätzliches Winkelgetriebe benötigt wird. Die Hubspindeln werden von einer gemeinsamen Steuermechanik betätigt. Bei einem solchen Treiber ist von Nachteil, daß die drei Gelenkwellen in verschiedenen Richtungen nach außen verlaufen müssen und an weit voneinander entfernten Punkten enden. Ihr gemeinsamer Antrieb erfordert deshalb eine umständliche und aufwendige Getriebeanordnung. Als nachteilig erweist sich auch, daß für radial zugestellte Rollen der Durchmesserbereich nach kleinen Durchmessern hin begrenzt ist, denn selbst bei Einsatz eines spitzwinkligen Rollenprofiles anstatt des vorgesehenen Rechteckprofiles lassen sich die Rollen nicht beliebig nahe zusammenfahren. Als Nachteil muß ferner angesehen werden, daß die gemeinsame Betätigung von drei weit voneinander entfernten Hubspindeln nicht ohne erheblichen mechanischen Aufwand möglich ist.

Demgegenüber stellt sich die Erfindung zur Aufgabe, einen Treiber der beschriebenen Art zu schaffen, bei dem in einfacher Weise sowohl die Bewegungsenergie an die Treibelemente herangeführt wird, als auch die gleichzeitige Verstellung der Treibelemente gegenüber dem Halbzeug ermöglicht wird.

Die Lösung dieser Aufgabe besteht in einem Treiber, der gemäß Patentanspruch 1 gekennzeichnet ist.

Ein solcher Treiber besitzt einen einfachen und raumsparenden Aufbau. Da die Arme, die die Treibelemente tragen, kurz dimensioniert sein können, benötigt der Treiber keine großen Abmessungen in radialer Richtung. Weger der senkrecht zur Laufrichtung schwenkenden Arme kann auch die Baulänge in axialer Richtung extrem klein gehalten werden. Bei entsprechender Wahl des Anstellwinkels der Arme verschiebt sich der Auflagepunkt einer Rolle auf dem Halbzeug in der Weise, daß mit kleiner werdendem Halbzeugdurchmesser der Auflagepunkt nach der Kante der Rolle hinwandert. Das bringt drei für den Konstrukteur wünschenswerte Folgen mit sich. Zum einen konzentriert sich der Verschleiß nicht auf eine einzige Lauflinie der Rollenoberfläche, zum anderen nimmt der Andruck der Rollen nach dem Hebelgesetz mit dem Halbzeugdurchmesser ab. Zum dritten läßt sich bei Einsatz von drei Rollen der Anstellwinkel so ausführen, daß bei der engstmöglichen Zustellung der Rollen sich jeweils eine Kante einer Rolle mit den entsprechenden Kanten der anderen Rollen in einem Punkte trifft, daß also eine Zustellung für Halbzeug fast beliebig kleinen Durchmessers möglich ist. Die nach der erfindungsgemäßen Lösung zur Heranführung der Bewegungsenergie für die Treibelemente vorgesehenen Wellen sind untereinander naturgemäß parallel. Das bedingt sehr einfache Möglichkeiten zu deren gemeinsamem Antrieb. Als vorteilhaft erweist sich an der erfindungsgemäßen Lösung auch, daß sich mit ihr einfache und problemlose Möglichkeiten zur gemeinsamen Verstellung der die Treibelemente tragenden Arme ergeben. Eine Reihe zweckmäßiger Ausgestaltungen der Erfindung ist in den Unteransprüchen angegeben.

Im folgenden wird anhand von Beispielen und mit Hilfe einiger Figuren die Erfindung näher erläutert. Es zeigen im einzelnen :

Figur 1   die Vorderansicht eines Treibers mit drei Treibarmen

Figur 2   eine Seitenansicht des Treibers

Figur 3   einen Treibarm des Treibers

Figur 4   eine Bandtreiberanordnung

Figur 5   einen Doppeltreiber

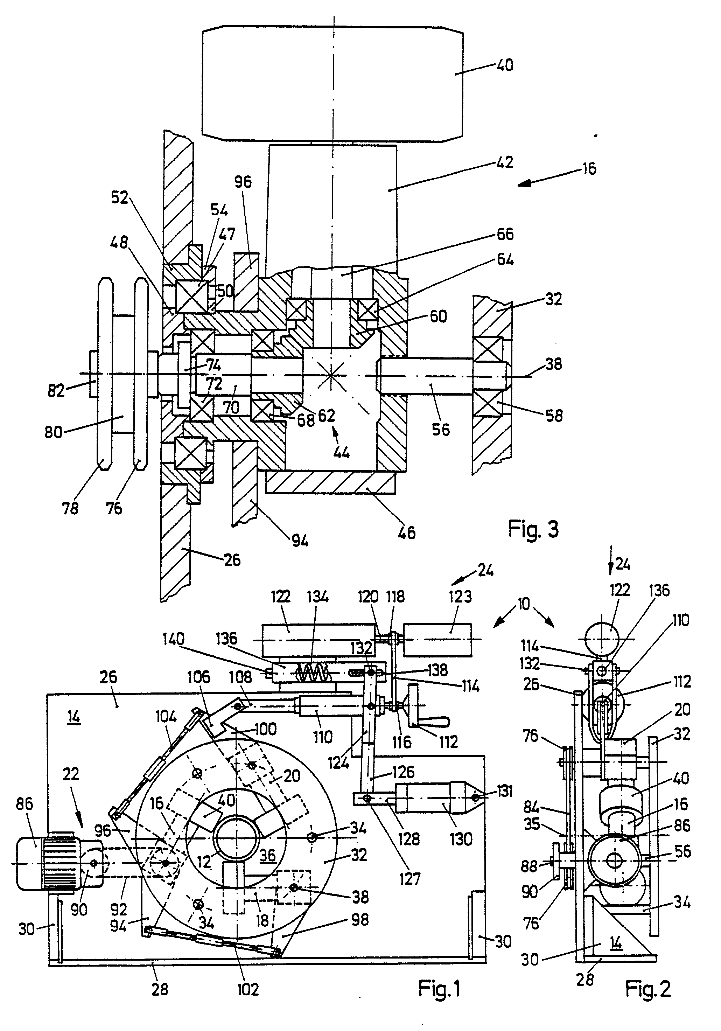

Der in den Figuren 1 und 2 in Vorder- bzw. Seitenansicht dargestellte Treiber 10 dient dazu, Halbzeug wie etwa ein Rohr 12 in zentrischer Lage und mit gleichbleibender Geschwindigkeit durch bestimmte Einrichtungen, insbesondere solche zur zerstörungsfreien Werkstoffprüfung hindurchbewegen. Es läßt sich unterteilen in einen Montagekörper 14, drei weitgehend gleichaufgebaute Treibarme 16, 18, 20, eine Antriebseinrichtung 22 für die Treibarme sowie eine Verstelleinrichtung 24 für die Treibarme.

Der Montagekörper 14 besteht aus einer Montageplatte 26, einer Grundplatte 28 und zwei Versteifungswinkeln 30, jeweils mit der Montageplatte verschweißt, sowie aus einem Montagering 32, der durch die Bolzen 34 starr mit der Montageplatte verbunden ist. Montageplatte 26 wie auch Montageringe 32 weisen jeweils eine kreisförmige Öffnung 36 als Durchlaß für das Halbzeug 12 auf.

Die drei Treibarme 16, 18, 20 sind im Winkelabstand von jeweils 120° zwischen Montageplatte 26 und Montageringe 32 gelagert und können in einer Ebene senkrecht zur Laufbahn 35 des Halbzeuges 12 um eine Drehachse 38 geschwenkt werden. Grundsätzlich genügt es, eines der Rotierelemente, im vorliegenden Beispiel der Rollen 40, anzutreiben und man wird bei einfachen Anforderungen auch so verfahren.

Für die im Beispiel benutzte Verfahrensweise, alle Rollen 40 anzutreiben, spricht, daß die übertragbare Kraft größer, der Verschleiß der Kontaktoberflächen sowohl geringer als auch gleichmäßiger und die Laufruhe besser wird. Bei nicht angetriebenen Rollen 40 müßte man in Kauf nehmen, daß die letzteren von jedem neu einlaufenden Halbzeug stoßartig auf die Geschwindigkeit der angetriebenen Rolle beschleunigt werden. Die Rollen 40 können aus einem metallischen Werkstoff hergestellt sein. Zur Verbesserung der Friktion und zur Dämpfung von Schwingungen des Halbzeuges 12 kann die Lauffläche der Rollen mit einem Überzug, der entsprechende elastische Eigenschaften aufweist, überzogen sein.

Einer der Treibarme (16) ist in Figur 3 vergrößert herausgezeichnet. Man erkennt hier zunächst ein Gehäuse 42, das in seinem Inneren ein Winkelgetriebe 44 birgt und von einer Platte 46 abgeschlossen wird. Das Gehäuse 42 ist über ein Kugellager 47 mit der Montageplatte 26 verbunden. Zur Befestigung des Lagers 47 am Gehäuse 42 dienen ein Ring 48 und eine Scheibe 50, zur Befestigung des Lagers 47 an der Montageplatte 26 ein Lagerbett 52 und ein Lagerring 54. Auf der Gegenseite ist das Gehäuse 42 durch einen am letzteren befestigten Zapfen 56 über ein Kugellager 58 im Montagering 32 abgestützt. Das Winkelgetriebe 44 setzt sich zusammen aus zwei miteinander im Eingriff stehenden Kegelrädern 60 und 62. Kegelrad 60 treibt, gelagert von einem Kugellager 64, über eine Welle 66 die Rolle 40 an, Kegelrad 62 ruht in einem Kugellager 68 und wird von einer Welle 70 angetrieben, die ihrerseits in einem Kugellager 72 ruht. Das letztere ist am Gehäuse 42 durch Ring 48 befestigt und wellenseitig durch einen Gewindering 74 festgeschraubt. Am äußeren Ende von Welle 70 sitzen zwei Antriebsräder 76 und 78, die von einer Scheibe 80 auf Abstand und durch eine Schraube 82 zusammengehalten werden. Zum Antrieb der Rollen 40 über Winkelgetriebe 44 und Wellen 70 und 66 sind die Antriebsräder 76 aller Treibarme 16, 18, 20 über eine Treibkette 84 untereinander verbunden, so daß es zum Antrieb aller Rollen genügt, das Antriebsrad 78 des Treibarmes 16 anzutreiben.

Dies geschieht durch die Antriebseinrichtung 22, deren aktiver Teil ein Winkelgetriebemotor 86 darstellt. Durch die Bauform des letzteren ist es möglich, mit der gegebenen Baulänge des Montagekörpers auszukommen. Der Winkelgetriebemotor 86 ist an der Montageplatte 26 angebracht und treibt über eine Welle 88 ein Treibrad 90, das seinerseits über eine Kette 92 das Antriebsrad 78 des Treibarmes 16 treibt. Für die übrigen Treibarme (19, 20) kann das Treibrad 78 entfallen.

Außer durch den letztgenannten Umstand unterscheiden sich die Treibarme 16, 18, 20 noch durch am Gehäuse 42 starr angebrachte Hebelansätze 94, 96, 98, 100 verschiedener Ausbildung. So gehört zum Treiber 16 je ein seitwärts und ein rückwärts ragender Hebelansatz 94 bzw. 96, zum Treibarm 18 ein seitwärts ragender Hebelansatz 98 und zum Treibarm 20 ein rückwärts ragender Hebelansatz 100. Die Hebelansätze 94 und 96 sind mit den Hebelansätzen 98 bzw. 100 durch Gestänge 102 bzw. 104 verbunden, die jeweils am gleichen Radius des Schwenkkreises um die Drehachse 38 angreifen und so für alle Treibarme 16, 18, 20 die gleiche Schwenkbewegung erzwingen, wenn einer von ihnen eine solche ausführt. Auf diese Weise wird die gewünschte Zentrierung des Halbzeuges 14 ermöglicht. Statt die Treibarme 16, 18, 20 zur Betätigung ihrer Verstellung über Hebelansätze und Gestänge untereinander zu verbinden, kann dies beispielsweise auch dadurch geschehen, daß am Gehäuse 42 koaxial zur Drehachse 38 Kettenräder fest angebracht sind, die durch eine endlose Kette miteinander in kraftschlüssiger Verbindung stehen. Zur Verstellung kann die Kette oder eines der Kettenräder von einer Verstelleinrichtung angetrieben sein.

Den notwendigen Andruck für die Rollen 40 sowie deren Verstellung und Anstellung gegenüber dem Halbzeug 12 besorgt die Verstelleinrichtung 24. Eine am Hebelansatz 100 des Treibarmes 20 starr fixierte Lasche 106 ist an den Hubarm 108 eines Spindeltriebes 110 angekoppelt. Zur Betätigung des Spindeltriebes 110 und damit zur Verstellung der Rollen 40 auf einen gewünschten Halbzeugdurchmesser dient ein Handrad 112 und/ oder über einen Zahnriemen 114, Zahnräder 116, 118 und eine Welle 120 ein Stellantrieb 122. Ein Geber 123 kann mit dem Stellantrieb 122 über die Welle 120 verbunden sein. Sein elektrisches Signal gibt jederzeit Aufschluß über die Einstellung der Treibarme 16, 18, 20. Die Hubspindel 110 ist in der Gabel 124 eines Gabelhebels 126 drehbar gelagert. Der Gabelhebel 126 ist an seinem unteren Ende durch einen Bolzen 127 an dem Hubarm 128 eines Hubzylinders 130 angelenkt, der seinerseits mit einem Gelenkauge 131 an der Montageplatte 26 drehgelagert ist. An seinem oberen Ende ist der Gabelhebel 126 mit der Druckfeder 134 einer Federanordnung 136 durch einen Bolzen 132 verbunden, der von der Druckfeder 134 nach rechts gedrückt wird und somit bei entsprechender Anstellung der Rollen 40 einen ständigen Andruck der Rollen auf das Halbzeug 12 bewirkt. Der Weg des Bolzens 132 wird begrenzt durch einen Anschlag 138, der auch die Ruhelage der Rollen 40 bei fehlendem Halbzeug 12 festlegt. Die Andruckkraft der Federanordnung 136 ist über eine Schraube 140 einstellbar, so daß ein Rollenandruck gewählt werden kann, der einerseits ausreichende Friktion gewährleistet, andererseits eine Verformung des Halbzeuges 12, etwa bei dünnwandigem Rohr, mit Sicherheit ausschließt.

Während die eigentliche Aufgabe des Druckzylinders 130 das Anstellen der Rollen 40 über eine kurze Strecke ist, kann er aber auch, wenn dies zweckdienlich ist, die Aufgabe des Andrückens der Rollen an das Halbzeug 12 mitübernehmen. In diesem Fall erübrigt sich die Federanordnung 136 und der Bolzen 132 erhält eine feste Drehlagerung. Umgekehrt kann aber auch, wenn auf die Anstellung durch den Druckzylinder 130 verzichtet werden soll, das untere Ende des Gabelhebels 126 durch den Bolzen 127 direkt an der Montageplatte 26 gelagert sein.

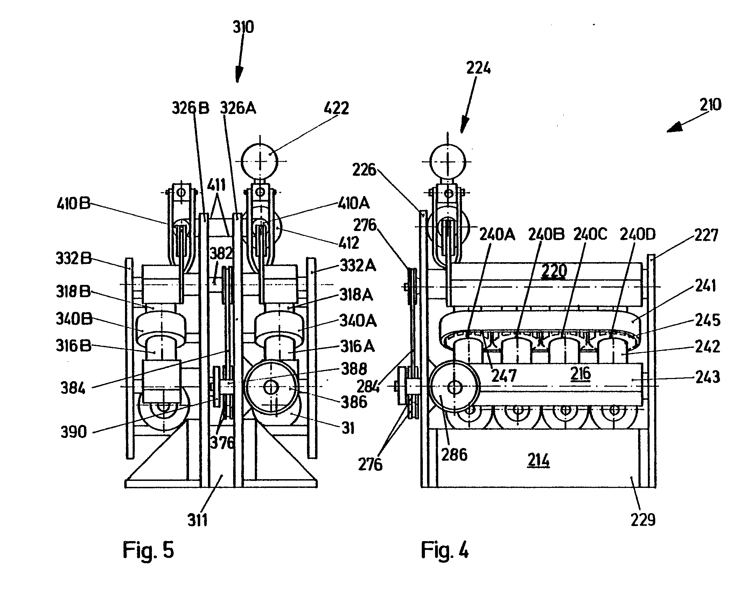

Die in Figur 4 dargestellte alternative Ausführungsform der Erfindung, hier als Bandtreiberanordnung 210 bezeichnet, findet vor allem in drei Fällen Anwendung :

1. Das Halbzeug ist glatt und verölt, so daß mit Stahlrollen die benötigten Treibkräfte nicht realisiert werden können.

2. Das Halbzeug besitzt empfindliche Oberflächen oder läßt hohe Haltekräfte aus Festigkeitsgründen nicht zu. (z. B. dünnwandige Präzisionsrohre)

3. Die vom Halbzeug zu durchlaufende Einrichtung erfordert eine besonders hohe Vibrationsdämpfung bzw. der Einlaufrollgang regt im besonderen Maß Vibrationen an.

In den genannten Fällen lassen sich durch eine Bandtreiberanordnung 210 große Treibkräfte, eine präzise zentrische Führung, und ein hohes Maß von Laufruhe und Vibrationsdämpfung verbinden. Von vorne gesehen bietet die Anordnung 210 im wesentlichen das gleiche Bild, wie der zuvor beschriebene Treiber 10, so daß auf die Vorderansicht gemäß Figur 1 verwiesen werden kann. Der Montagekörper 214 besteht im wesentlichen aus der Montageplatte 226 und einer rückwärtigen Bauplatte 227. Die genannten Platten werden durch geeignete Bauelemente zusammengehalten, von denen in Figur 4 nur eine Seitenplatte 229 dargestellt ist. Zwischen Montageplatte 226 und Bauplatte 227 sind drei Treibarme 216, 218, 220 angebracht (nur Treibarm 216 ist gut erkennbar), von denen jeder vier Rollen 240A, 240B, 240C und 240D aufweist. Die letzteren sind über vier Lagergehäuse 242 mit einem Balken 243 verbunden, der entsprechend dem Gehäuse 42 in Figur 3 in den Platten 226 und 227 gelagert ist. Die Rollen 240A bis 240D sind von einem robusten elastischen endlosen Treibband 241 umhüllt. Ein seitliches Abrutschen des Treibbandes 241 kann durch beidseitige Scheiben an jeder Rolle 240 oder durch eine entsprechende Formgebung der Rollen verhindert werden. Die notwendige Spannung des Treibbandes 241 wird von einer nicht dargestellten Spannvorrichtung erzeugt. Das Treibband 241 besitzt ein zahnförmiges Profil 245, das in entsprechende Zähne 247 der Rollen 240A, 240B, 240C, 240D eingreift, um so eine gute Kraftübertragung zu gewährleisten. Die Rollen 240D dienen als Umlenkrollen. Die Rollen 240B und 240C sind als Stützrollen eingesetzt und verhelfen dazu, daß über einen möglichst großen Teil der Bandlänge Kräfte übertragen werden können. Nur die Rollen 240A arbeiten als Antriebsrollen. Sie werden analog zu dem in Figur 3 angewendeten Prinzip über ein Winkelgetriebe, ferner über Antriebsräder 276, eine Treibkette 284, eine Treibkette 92 und den Winkelgetriebemotor 286 angetrieben. Eine Verstelleinrichtung 224 kann in allen Einzelheiten der Verstelleinrichtung 24 entsprechen.

Als eine weitere alternative Ausführungsform der Erfindung soll der in Figur 5 wiedergegebene Doppeltreiber 310 angesehen werden. Er wird angewendet, wenn die durch den einfachen Treiber 10 realisierbaren Treibkräfte nicht mehr ausreichen, ohne daß jedoch die hohen Anforderungen gestellt werden, wie sie bei Bandtreiberanordnung 210 möglich sind. Die rechte Hälfte des Doppeltreibers 310 ist, wie aus Figur 5 hervorgeht, weitgehend gleich aufgebaut wie der oben beschriebene Treiber 10. Es soll daher nur zur Sprache kommen, was vom oben Beschriebenen abweicht. Treibarmen 316A, 318A, 320A stehen auf der linken Seite von Figur 5 spiegelbildlich gleiche Treibarme 316B, 318B, 320B gegenüber, die schwenkbar wie die erstgenannten Treibarme zwischen Platten 326B und 332B eingebaut sind. Die Platten 326A und 326B werden durch Verbindungsmittel, von denen nur Verbindungsplatte 311 dargestellt ist, im notwendigen Abstand gehalten. Die Wellen 382 der Treibarme 316A, 318A, 320A sind durchgehend und treiben gleichzeitig die Treibarme 316B, 318B, 320B an. Die Winkelgetriebe in den Treibarmen 316B, 318B, 320B sind so angeschlossen, daß die Rollen 340 B in der Transporteinrichtung laufen. Drei kraftschlüssig mit den Wellen 382 verbundene Antriebsräder 376 sind umspannt von einer Treibkette 384 und werden über eine analog zur Treibkette 92 in Figur 1 wirkende Treibkette, ein Treibrad 390 und eine Welle 388 von einem Winkelgetriebemotor 386 angetrieben. Zur Verstellung der Treibarme 316A, 318A, 320A bzw. 316B, 318B, 320B sind die gleichen Betätigungsmittel vorgesehen, nämlich Hebelansätze und diese verbindende Gestänge (wie in Figur dargestellt), ferner über eine Lasche an einem der Hebelansätze angelenkte Hubspindeln 410A und 410B. Als gemeinsamer Antrieb für die Hubspindeln 410A und 410B dienen ein Handrad 412 bzw. ein Stellantrieb 422. Die dazu erforderliche Verbindung wird hergestellt durch ein Treibrad auf der Antriebswelle der Hubspindel 410B, einem Treibriemen 411 und ein zusätzliches Treibrad auf der Antriebswelle der Hubspindel 410A.

**Patentansprüche**

1. Treiber (10 ; 210 ; 310) zum selbstzentrierenden Antreiben von langgestrecktem Halbzeug (12) runden oder polygonalen Querschnitts in Längsrichtung des Halbzeuges (12) entlang einer Laufbahn (35), mit einem Montagekörper (14 ; 214), der einen Durchlaß (36) für das entlang der Laufbahn (35) getriebenen Halbzeug (12) aufweist, mit wenigstens drei am Montagekörper (14 ; 214) gelagerten Armen (16, 18, 20 ; 216, 218, 220 ; 316, 318, 320), an deren dem Halbzeug (12) nahem Ende sich jeweils ein Rotierelement (40 ; 240 ; 340) befindet, wobei wenigstens eines dieser Rotierelemente (40 ; 240 ; 340) angetrieben und seinerseits zur antreibenden Berührung mit dem Halbzeug (12) befähigt ist und mit Mitteln (96-122) zum gleichzeitigen und gleichförmigen Verstellen der drei Arme (16, 18, 20 ; 216, 218, 220 ; 316, 318, 320) gegenüber dem Halbzeug (12), dadurch gekennzeichnet, daß die Arme (16, 18, 20 ; 216, 218, 220 ; 316, 318, 320) in einer Ebene senkrecht zur Laufbahn (35) des Halbzeuges (12) um eine Schwenkachse (38) schwenkbar sind und daß die Rotationsbewegung für die angetriebenen Rotierelemente (40 ; 240A ; 340A, 340B) über eine mit der Schwenkachse koaxiale Welle (70) in den Arm (16, 18, 20 ; 216, 218, 220 ; 316, 318, 320) eingeleitet und über ein im oder am Arm (16, 18, 20 ; 216, 218, 220 ; 316, 318, 320) eingebautes Winkelgetriebe (44) dem Rotierelement (40 ; 240A ; 340A, 340B) zugeführt wird.

2. Treiber nach Anspruch 1, dadurch gekennzeichnet, daß die Wellen (70) untereinander durch Treibmittel (76, 84) verbunden sind und über die letzteren gemeinsam angetrieben werden.

3. Treiber nach Anspruch 1 oder 2, dadurch gekennzeichnet, daß drei im Winkelabstand von 120° gelagerte Arme (16, 18, 20 ; 216, 218, 220 ; 316, 318, 320) vorgesehen sind mit jeweils einem angetriebenen Rotiermittel (40 ; 240A ; 340A, 340B).

4. Treiber nach einem der Ansprüche 1-3, dadurch gekennzeichnet, daß die Arme (16, 18, 20 ; 216, 218, 220 ; 316, 318, 320) an ihrer dem Halbzeug (12) abgewendeten Seite Hebelansätze (94, 96, 98, 100) aufweisen, die zum gemeinsamen Verstellen und Anstellen der Arme durch Gestänge (102, 104) untereinander verbunden sind.

5. Treiber nach Anspruch 4, dadurch gekennzeichnet, daß manuell und/oder motorisch getriebene Einstellmittel (106, 108, 110) zum gemeinsamen Verstellen und Anstellen der Arme (16, 18, 20 ; 216, 218, 220 ; 316, 318, 320) an einen der Arme oder eines der Gestänge (102, 104) angeschlossen sind.

6. Treiber nach Anspruch 5, dadurch gekennzeichnet, daß ein Druckzylinder (130) zum Anstellen der Rotierelemente (40 ; 240 ; 340) an das Halbzeug (12) in Serie mit den Einstellmitteln (106, 108, 110) geschaltet ist.

7. Treiber nach Anspruch 5, dadurch gekennzeichnet, daß eine Federanordnung (136) zum Andrücken der Rotierelemente (40 ; 240 ; 340) an das Halbzeug in Serie mit den Einstellmitteln (106, 108, 110) geschaltet ist.

8. Treiber nach Anspruch 4 und 5, dadurch gekennzeichnet, daß zum Einstellen der Arme (16, 18, 20 ; 216, 218, 220 ; 316, 318, 320) ein Spindeltrieb (110) vorgesehen ist, der einerseits an einem der Hebelansätze (100) angreift, andererseits an einem Hebel (126), der seinerseits direkt oder indirekt am Montagekörper (14) drehbar gelagert ist und der durch eine Federanordnung (140) im die Rotierelemente (40 ; 240 ; 340) anstellenden Sinne in Richtung auf einen Anschlag (138) gedrückt wird.

9. Treiber nach Anspruch 8, dadurch gekennzeichnet, daß die Kraft der Federanordnung (140) einstellbar ist.

10. Treiber nach Anspruch 8, dadurch gekennzeichnet, daß der Hebel (126) statt direkt am Montagekörper (14) gelagert zu sein über einen Druckzylinder (130) mit dem Montagekörper verbunden ist.

11. Treiber nach Anspruch 8, dadurch gekennzeichnet, daß die Federanordnung (140) entfällt und daß die sonst an der Federanordnung angreifende Seite des Hebels (126) am Montagekörper (14) gelagert ist.

12. Treiber nach einen der vorhergehenden Ansprüche, dadurch gekennzeichnet, daß die Rotierlelemente als Bandtreiber (240) ausgebildet sind mit zwei parallelachsigen Rollen (240A, 240D), die von einem endlosen Band (241) aus verschleißfestem Material umschlungen sind und von denen eine als Treibrolle (240A) und eine als Umlenkrolle (240D) arbeitet.

13. Treiber nach Anspruch 12, dadurch gekennzeichnet, daß das Band (241) und die Rollen (240A, 240D) quer zu ihrer Laufrichtung verlaufende, ineinander eingreifende Profilrillen (245) bzw. Zähne (247) aufweisen.

14. Treiber nach Anspruch 12 oder 13, dadurch gekennzeichnet, daß zusätzlich ein oder mehrere Stützrollen (240B, 240C) zwischen Treibrolle (240A) und Umlenkrolle (240D) angeordnet sind.

15. Anordnung von zwei Treibern gemäß Anspruch 1 zu einem Doppeltreiber, dadurch gekennzeichnet, daß die beiden Treiber (10) in Richtung der Laufbahn (35) unmittelbar hintereinander montiert sind, wobei einer der beiden spiegelbildlich zum anderen aufgebaut ist, und daß beide den Antrieb (386) der Rollen (316, 318, 320) und/oder den Antrieb (422, 412) der Einstellmittel gemeinsam haben.

**Claims**

1. A driver (10 ; 210 ; 310) for self-centeringly driving an elongate semi-finished article (12) of round or polygonal cross-section in the longitudinal direction of the semi-finished article (12) along a path (35), comprising a mounting body (14 ; 214) which has a through opening (36) for the semi-finished article (12) which is driven along the path (35), at least three arms (16, 18, 20 ; 216, 218, 220 ; 316, 318, 320) which are mounted on the mounting body (14 ; 214) and at the end of each of which, adjacent to the semi-finished article (12), is disposed a respective rotating element (40 ; 240 ; 340), wherein at least one of said rotating elements (40 ; 240 ; 340) is driven and in turn is capable of coming into driving contact with the semi-finished article (12), and means (96-122) for simultaneously and uniformly displacing the three arms (16, 18, 20 ; 216, 218, 220 ; 316, 318, 320) with respect to the semi-finished article (12), characterised in that the arms (16, 18, 20 ; 216, 218, 220 ; 316, 318, 320) are pivotable about a pivot axis (38) in a plane perpendicularly to the path (35) of the semi-finished article (12) and that the rotary movement for the driven rotating elements (40 ; 240A ; 340A, 340B) is introduced into the arm (16, 18, 20 ; 216, 218, 220 ; 316, 318, 320) by way of a shaft (70) which is coaxial with the pivot axis, and is transmitted to the rotating element (40 ; 240A ; 340A, 340B) by way of an angle transmission (44) which is installed in or on the arm (16, 18, 20 ; 216, 218, 220 ; 316, 318, 320).

2. A driver according to claim 1 characterised in that the shafts (70) are connected together by drive means (76, 84) and are jointly driven by way thereof.

3. A driver according to claim 1 or claim 2 characterised in that there are three arms (16, 18, 20 ; 216, 218, 220 ; 316, 318, 320) which are mounted at angular spacings of 120°, each having a respective driven rotating means (40 ; 240A ; 340A, 340B).

4. A driver according to one of claims 1 to 3 characterised in that at their side remote from the semi-finished article (12) the arms (16, 18, 20 ; 216, 218, 220 ; 316, 318, 320) have lever projections (94, 96, 98, 100) which are connected together by linkages (102, 104) for joint displacement and positioning of the arms.

5. A driver according to claim 4 characterised in that manually driven and/or motor-driven adjusting means (106, 108, 110) for jointly displacing and positioning the arms (16, 18, 20 ; 216, 218, 220 ; 316, 318, 320) are connected to one of the arms or one of the linkages (102, 104).

6. A driver according to claim 5 characterised in that a pressure cylinder (130) for positioning the rotating elements (40 ; 240 ; 340) against the semi-finished article (12) is connected in series with the adjusting means (106, 108, 110).

7. A driver according to claim 5 characterised in that a spring arrangement (136) for pressing the rotating elements (40 ; 240 ; 340) against the semi-finished article is connected in series with the adjusting means (106, 108, 110).

8. A driver according to claims 4 and 5 characterised in that a spindle drive (110) is provided for adjusting the arms (16, 18, 20 ; 216, 218, 220 ; 316, 318, 320), the spindle drive on the one hand engaging one of the lever projections (100) and on the other hand engaging a lever (126) which in turn is rotatably mounted directly or indirectly on the mounting body (14) and which is urged towards an abutment (138) in the direction of positioning the rotating elements (40 ; 240 ; 340) against the semi-finished article, by a spring arrangement (140).

9. A driver according to claim 8 characterised in that the force of the spring arrangement (140) is adjustable.

10. A driver according to claim 8 characterised in that, instead of the lever (126) being mounted directly to the mounting body (14), it is connected to the mounting body by way of a pressure cylinder (130).

11. A driver according to claim 8 characterised in that the spring arrangement (140) is omitted and that the side of the lever (126) which otherwise engages the spring arrangement is mounted to the mounting body (14).

12. A driver according to one of the preceding claims characterised in that the rotating elements are in the form of belt drivers (240) having two parallel-axis rollers (240A, 240D), around which passes an endless belt (241) of wear-resistant material, one of the rollers operating as a drive roller (240A) and the other operating as a direction-changing roller (240D).

13. A driver according to claim 12 characterised in that the belt (241) and the rollers (240A, 240D) have shaped grooves (245) and teeth (247) respectively, which engage one into the other and which extend transversely with respect to the direction of travel of the belt and the rollers.

14. A driver according to claim 12 or claim 13 characterised in that one or more support rollers (240B, 240C) are additionally arranged between the drive roller (240A) and the direction-changing roller (240D).

15. An arrangement of two drivers in accordance with claim 1 to provide a double driver characterised in that the two drivers (10) are arranged in direct succession in the direction of the path (35), wherein one of the two drivers is constructed in mirror-image relationship to the other and that both drivers have in common the drive (386) for the rollers (316, 318, 320) and/or the drive (422, 412) for the adjusting means.

**Revendications**

1. Appareil (10 ; 210 ; 310) pour le centrage automatique de demi-produits (12) longs, de section ronde ou polygonale dans la direction longitudinale du demi-produit (12), le long d'une voie de déplacement (35), comportant un corps de montage (14 ; 214) qui présente un passage (36) pour le demi-produit (12) propulsé le long de la voie de déplacement (35), comportant au moins trois bras (16, 18, 20 ; 216, 218, 220 ; 316, 318, 320) montés sur le corps de montage (14 ; 214) à l'extrémité desquels, proche du demi-produit (12), se trouve un élément de rotation (40 ; 240 ; 340), l'un au moins de ces éléments de rotation (40, 240 ; 340) étant entraîné et de son côté en contact d'entraînement avec le demi-produit (12), ainsi que des moyens (96-122) pour le déplacement simultané et de même forme des trois bras (16, 18, 20 ; 216, 218, 220 ; 316, 318, 320) par rapport au demi-produit (12), caractérisé en ce que les bras (16, 18, 20 ; 216, 218, 220 ; 316, 318, 320) peuvent pivoter autour d'un axe de pivotement (38), dans un plan perpendiculaire à la voie de déplacement (35) du demi-produit (12) et en ce que le mouvement de rotation des éléments de rotation (40 ; 240A ; 340A, 340B) entraînés est induit dans le bras (16, 18, 20 ; 216, 218, 220 ; 316, 318, 320) par un arbre 70 coaxial à l'axe de pivotement et transmis à l'élément de rotation (40 ; 240A ; 340A ; 340B) par une transmission angulaire (44) montée dans ou sur l'arbre (16, 18, 20 ; 216, 218, 220 ; 316, 318, 320).

2. Appareil selon la revendication 1, caractérisé en ce que les arbres (70) sont reliés entre eux par des moyens de propulsion (76, 84) et entraînés ensemble par ces derniers.

3. Appareil selon la revendication 1 ou 2, caractérisé en ce que trois bras (16, 18, 20 ; 216, 218, 220 ; 316, 318, 320) montés à une distance angulaire de 120°, sont prévus avec chacun un moyen de rotation (40 ; 240A ; 340A ; 340B) entraîné.

4. Appareil selon l'une des revendications 1 à 3, caractérisé en ce que les bras (16, 18, 20 ; 216, 218, 220 ; 316, 318, 320) présentent, sur leur côté opposé au demi-produit (12), des bouts de levier (94, 96, 98, 100) qui sont reliés entre eux pour le réglage et le serrage commun des bras par une tringlerie (102, 104).

5. Appareil selon la revendication 4, caractérisé en ce que des moyens de réglage (106, 108, 110) manuels et/ou motorisés, destinés au réglage et au serrage communs des bras (16, 18, 20 ; 216, 218, 220 ; 316, 318, 320) sont raccordés à l'un des bras ou à l'une des tringles (102, 104).

6. Appareil selon la revendication 5, caractérisé en ce qu'un vérin (130) est monté en série avec les moyens de réglage (106, 108, 110) pour le serrage des éléments de rotation (40 ; 240 ; 340) sur le demi-produit (12).

7. Appareil selon la revendication 5, caractérisé en ce qu'un dispositif à ressort (136) est monté en série avec les moyens de réglage (106, 108, 110) pour presser les éléments de rotation (40 ; 240 ; 340) sur le demi-produit.

8. Appareil selon les revendications 4 et 5, caractérisé en ce qu'il est prévu pour le réglage des bras (16, 18, 20 ; 216, 218, 220 ; 316, 318, 320), une broche (110) qui d'une part agit sur l'un des bouts de levier (100), d'autre part sur un levier (126) qui à son tour est monté en rotation directement ou indirectement sur le corps de montage (14) et qui est pressé par un dispositif à ressort (140) contre une butée (138), dans le sens de mise en marche des éléments de rotation (40 ; 240 ; 340).

9. Appareil selon la revendication 8, caractérisé en ce que la force du dispositif à ressort (140) est réglable.

10. Appareil selon la revendication 8, caractérisé en ce qu'au lieu d'être monté directement sur le corps de montage (14), le levier (126) est relié au corps de montage par un vérin (130).

11. Appareil selon la revendication 8, caractérisé en ce que le dispositif à ressort (40) est supprimé et en ce que le côté du levier (126) qui autrement agit sur le dispositif à ressort, est monté sur le corps de montage (14).

12. Appareil selon l'une des revendications 1 à 11, caractérisé en ce que les éléments de rotation sont des éléments à bande (240) comportant deux poulies (240A, 240D) à axes parallèles, sur lesquelles passe une bande (241) sans fin en matière résistant à l'usure et dont l'une sert de poulie motrice (240A) et l'autre de poulie de renvoi (240D).

13. Appareil selon la revendication 12, caractérisé en ce que la bande (241) et les poulies (240A, 240D) présentent, perpendiculairement à leur sens de rotation, respectivement des rainures profilées (245) et des dents (247) engrenant les unes dans les autres.

14. Appareil selon la revendication 12 ou 13, caractérisé en ce qu'en supplément une ou plusieurs poulies de soutien (240B, 240C) sont disposées entre la poulie motrice (240A) et la poulie de renvoi (240D).

15. Dispositif comportant deux appareils selon la revendication 1 pour former un appareil double, caractérisé en ce que les deux appareils (10) sont montés directement l'un derrière l'autre dans la direction de la voie de déplacement (35), l'un étant l'image réfléchie de l'autre, et en ce que tous deux ont en commun le mécanisme d'entraînement (386) des rouleaux (316, 318, 320) et/ou le mécanisme d'entraînement (422, 412) des moyens de réglage.

Fig. 3

Fig. 1

Fig. 2

Fig. 4

Fig. 5

2